# EUROPÄISCHE PATENTANMELDUNG

(11) **EP 2 565 738 A1**
(43) Veröffentlichungstag der Anmeldung: **06.03.2013**
(21) Anmeldenummer: 11179983.9
(22) Anmeldetag: 05.09.2011
(51) Int. Cl.: G05B 19/042

(54) **Industrieprozesssteuerung und modular aufgebautes Steuerungssystem**

(71) Anmelder: SIEMENS AKTIENGESELLSCHAFT, 80333 München (DE)
(72) Erfinder: Franke, Michael, 91056 Erlangen (DE); Raithel, Bernd, 91077 Dormitz (DE)

(57) **Zusammenfassung**

Die Erfindung betrifft eine Industrieprozesssteuerung (1), umfassend
- ein Interface (4a) ausgestaltet zum Anschluss von Baugruppen (11,12,13),
- ein Speichermittel (6),
- ein Identifikationsmittel (3) ausgestaltet um über das Interface (4a) eine Baugruppe (11,12,13) zu identifizieren und anhand einer Baugruppenkennung (11b,12b,13b) eine Versionskennung (Vxy) der Baugruppe (11,12,13) mit der jeweiligen Baugruppenkennung (11b,12b,13b) auszulesen,
- ein Selektionsmittel (5), welches mit dem Identifikationsmittel (3) in Verbindung steht und ausgestaltet ist mittels der Versionskennung (Vxy) und der Baugruppenkennung (11b,12b,13b) einen Datensatz (6a) aus dem Speichermittel (6) zu selektieren,
wobei der selektierte Datensatz (6a) eine auf die Versionskennung (Vxy) der Baugruppe (11,12,13) abgestimmte Handhabungsanleitung aufweist,
wobei das Selektionsmittel (5) weiterhin dazu ausgestaltet ist den Datensatz (6a) an einen Grafiktreiberbaustein (7) weiterzuleiten um die Handhabungsanleitung einem Benutzer zu präsentieren.

## Beschreibung

Die Erfindung betrifft eine Industrieprozesssteuerung, beispielsweise eine speicherprogrammierbare Steuerung der Automatisierungstechnik, wobei diese ausgestaltet ist mit einem Interface zum Anschluss von weiteren Baugruppen. Als weitere Baugruppen sind anzusehen Automatisierungsbaugruppen, wie z.B. digitale oder analoge Ein-/Ausgabebaugruppen, Kommunikationsbaugruppen, Funktionsmodule usw..

Für die Industrieprozesssteuerung und deren Baugruppen existieren Bedien-/Handhabungsanleitungen, aus welchen ersichtlich ist wie eine Baugruppe zu Beschalten, zu Warten, Einzustellen ist oder auszubauen ist. Soll beispielsweise eine Ein-/Ausgabebaugruppe eingebaut oder ausgebaut werden, dann müssen die Einbau-/Ausbauschritte in der entsprechenden Handhabungsanleitung nachgelesen werden.

Aufgabe der vorliegenden Erfindung ist es daher, eine Industrieprozesssteuerung zur Verfügung zu stellen, die bei Auftreten von Bedien-/Handhabungsfragen stets eine entsprechende Handhabungsanleitung zur Verfügung stellt.

Diese Aufgabe wird erfindungsgemäß dadurch gelöst, dass eine Industrieprozesssteuerung bereitgestellt wird, umfassend ein Interface ausgestaltet zum Anschluss von Baugruppen, ein Speichermittel, ein Identifikationsmittel ausgestaltet um über das Interface eine Baugruppe zu identifizieren und anhand einer Baugruppenkennung eine Versionskennung der Baugruppe mit der jeweiligen Baugruppenkennung auszulesen, ein Selektionsmittel, welches mit dem Identifikationsmittel in Verbindung steht und ausgestaltet ist mittels der Versionskennung und der Baugruppenkennung einen Datensatz aus dem Speichermittel zu selektieren, wobei der selektierte Datensatz eine auf die Versionskennung der Baugruppe abgestimmte Handhabungsanleitung aufweist, wobei das Selektionsmittel weiterhin dazu ausgestaltet ist den Datensatz an einen Grafiktreiberbaustein weiterzuleiten um die Handhabungsanleitung einem Benutzer zu präsentieren. Für einen Inbetriebnehmer oder Bediener einer derartigen Industrieprozesssteuerung ist es nun von großem Vorteil, dass bei Bedarf eine entsprechende Handhabungsanleitung bereitgestellt wird, welche zu der eingesetzten Version oder dem eingesetzten Entwicklungsstand der jeweiligen Baugruppe angepasst ist. Dies bietet den Vorteil, dass ein Benutzer stets eine aktuelle Handhabungsanleitung zu der angeschlossenen Baugruppe einsehen kann. Die Handhabungsanleitungen können nicht nur in Schriftform vorliegen, sondern es können Filmsequenzen oder animierte Grafiken, sowie Bildpräsentationen oder interaktive Steuerungsabläufe dem Benutzer präsentiert werden. Mit der Industrieprozesssteuerung ist es somit möglich, jeweils zu einer real angeschlossenen Baugruppe die richtige Handhabungsanleitung, beispielsweise für einen Montage- oder Servicefall, zu präsentieren.

In einer weiteren Ausgestaltungsform ist das Selektionsmittel dazu ausgestaltet einen Auswahlbefehl, welcher die Baugruppenkennung enthält, zu interpretieren und die Baugruppenkennung an das Identifikationsmittel weiterzugeben. Eine derartige Auswahl kann beispielsweise über ein in einem Inbetriebnahmerechner oder in einem Bedien- und Beobachtungsgerät, welches an die Industriesteuerung angeschlossen ist, ausgelöstes Ereignis aktiviert werden.

In einer weiteren Ausgestaltung weist die Industrieprozesssteuerung ein mit dem Grafiktreiberbaustein verbundenes Display auf. Eine Auswahl der jeweiligen Handhabungsanleitung kann nun beispielsweise mittels einer Menüauswahl direkt auf dem Display erfolgen.

Weiterhin ist es vorteilhaft, wenn die Industrieprozesssteuerung mit einem Gehäuse ausgestaltet ist, welches erste Verbindungsmittel aufweist, wobei das Display als eine bauliche Einheit ausgestaltet ist und zweite Verbindungsmittel aufweist, wobei die ersten und die zweiten Verbindungsmittel derart ausgestaltet sind, dass das Display elektrisch und mechanisch mit dem Gehäuse lösbar im Eingriff steht. Da nicht jede Industrieprozesssteuerung permanent ein Display benötigt, ist es von Vorteil wenn beispielsweise ein Inbetriebsetzer ein lösbares, mobil tragbares Display mit sich führt und bei Bedarf in die jeweils zu wartende Industrieprozesssteuerung einsteckt.

In einer alternativen Ausgestaltung ist das Display an einer der Baugruppen angeordnet oder es ist eine Displaybaugruppe vorhanden, wobei die Displaybaugruppe eine Baugruppe, vorzugsweise nur mit einer Anzeigefunktion ist. Dabei ist vorzugsweise das Interface derart ausgestaltet, dass der selektierte Datensatz über das Interface an die Baugruppe mit Display oder an die die separate Displaybaugruppe gesendet wird.

Auch ist es vorteilhaft, wenn das Speichermittel in der Baugruppe angeordnet ist.

Eine weitere Ausführungsform der zuvor genannten Ausführungsform ist es, wenn das Speichermittel in der baulichen Einheit des Displays angeordnet ist. Das Speichermittel in dem Display kann so beispielsweise täglich an die aktuellen Versionen von Handhabungsanleitungen angepasst werden. Wenn dann ein Inbetriebsetzer mit dem aktualisierten Speichermittel in dem Display, wobei das Display und das Speichermittel eine bauliche Einheit bilden, in eine zu automatisierende Anlage kommt und dabei auf eine Industrieprozesssteuerung trifft, welche schon längere Zeit im Einsatz ist und daher nicht mehr upgedatet werden konnte, so hat er dennoch für seine Inbetriebsetzerschritte oder seine Wartungsarbeiten immer eine aktuelle Version der jeweils zu gebrauchenden Handhabungsanleitungen in dem mobilen Display dabei und kann diese noch zusätzlich auf den Display einfach nachlesen, nach dem er es an die Steuerung oder die Baugruppe angesteckt hat.

Die eingangs genannte Aufgabe wird auch durch ein modular aufgebautes Steuerungssystem mit einer Industrieprozesssteuerung nach einem der vorangegangenen Ansprüche gelöst, wobei das Interface als ein selbstaufbauender Rückwandbus ausgestaltet ist und die Baugruppen aneinanderreihbar an der Industrieprozesssteuerung angeordnet sind, wobei eine Baugruppe ein Schaltmittel aufweist, welches ausgestaltet ist, den Auswahlbefehl abzusetzen. Die gewünschte Bedien-/Handhabungsanleitung kann somit direkt auf den Display der Industrieprozesssteuerung, welche ausgestaltet ist als eine speicherprogrammierbare Steuerung, angezeigt werden. Insbesondere bei modularen Systemen kann die Information aus den Handhabungsanleitungen modular granular angewählt werden. Durch die Verknüpfung des Auswahlbefehls mit der Baugruppenversion wird sichergestellt, dass automatisch die zur jeweiligen Baugruppe konsistenten Informationen angezeigt werden.

Weitere Vorteile und Ausgestaltungsmerkmale werden in der Zeichnung näher erläutert. Es zeigt die
- FIG 1: ein modular aufgebautes Steuerungssystem und die
- FIG 2: ein Gehäuse einer Industrieprozesssteuerung mit einem austauschbaren Display.

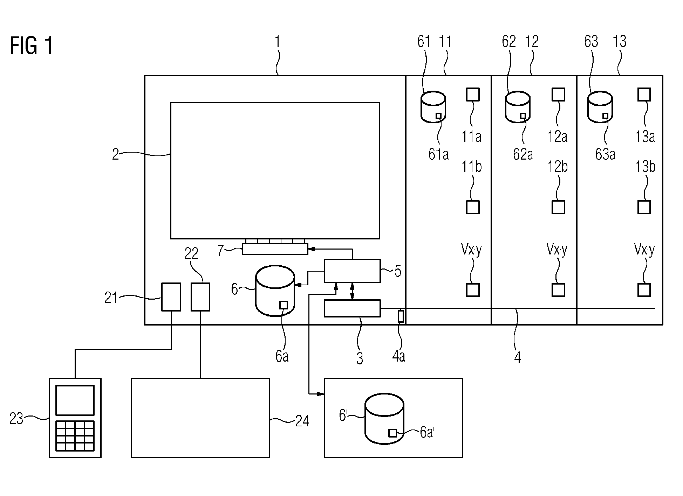

Gemäß FIG 1 ist ein modular aufgebautes Steuerungssystem mit einer Industrieprozesssteuerung 1 dargestellt. An die Industrieprozesssteuerung 1 sind über ein Interface 4a eine erste Baugruppe 11, eine zweite Baugruppe 12 und eine dritte Baugruppe 13 angeschlossen. Durch die Baugruppen 11,12,13 führt jeweils ein selbstaufbauender Rückwandbus 4, welcher mit dem Interface 4a in Verbindung steht.

Die Industrieprozesssteuerung 1 umfasst ein Speichermittel 6, ein Identifikationsmittel 3 ausgestaltet um über den Busanschluss 4a eine Baugruppe 11,12,13 zu identifizieren und anhand einer Baugruppenkennung 11b,12b,13b eine Versionskennung Vxy der Baugruppe 11,12,13 mit der jeweiligen Baugruppenkennung 11b,12b,13b auszulesen. Dabei weist die Industrieprozesssteuerung 1 weiterhin ein Selektionsmittel 5 auf, welches mit dem Identifikationsmittel 3 in Verbindung steht und ausgestaltet ist, mittels der Versionskennung Vxy und der Baugruppenkennung 11b,12b,13b einen Datensatz 6a aus dem Speichermittel 6 zu selektieren.

Der selektierte Datensatz 6a weist eine Handhabungsanleitung auf, welche auf die Versionskennung Vxy der jeweiligen Baugruppe 11,12,13 abgestimmt ist. Damit ist gewährleistet, dass zu der jeweiligen real angeschlossenen Baugruppe 11,12,13 die auf den jeweiligen Entwicklungsstand der Baugruppe angepasste Handhabungsanleitung einem Benutzer der Industrieprozesssteuerung 1 präsentiert werden kann.

Für eine Präsentation der Handhabungsanleitung weist die Industrieprozesssteuerung 1 ein Display 2 auf, welches mit einem Grafiktreiberbaustein 7 in Verbindung steht. Der Grafiktreiberbaustein 7 steht wiederum mit dem Selektionsmittel 5 in Verbindung. Und das Selektionsmittel 5 erhält über interne Datenleitungen den selektierten Datensatz 6a. Der selektierte Datensatz 6a kann somit aus dem Speichermittel 6 über das Selektionsmittel 5 an den Grafiktreiberbaustein 7 gelangen und in dem Display 2 grafisch für den Benutzer dargestellt werden.

Bei der Darstellung von Handhabungsanleitungen für die Baugruppen 11,12,13 ist es von weiterem Vorteil, wenn das Selektionsmittel dazu ausgestaltet ist einen Auswahlbefehl, welcher die Baugruppenkennung enthält, zu interpretieren um die Baugruppenkennung an das Identifikationsmittel 3 weiterzugeben.

Ein Auswahlbefehl kann beispielsweise durch eine Menüauswahl direkt auf dem Display 2 oder durch ein Schaltmittel 11a,12a, 13a an der Baugruppe 11,12,13 oder ein in einen Inbetriebnahmerechner 23 oder in einem Bediengerät 24 ausgelöstes Ereignis aktiviert werden.

Für den Fall, dass das Ereignis, welches den Auswahlbefehl aktiviert an der Baugruppe 11,12,13 ausgelöst wird, weist die erste Baugruppe 11 ein erstes Schaltmittel 11a, die zweite Baugruppe 12 ein zweites Schaltmittel 12a und die dritte Baugruppe 13 ein drittes Schaltmittel 13a auf.

Möchte ein Benutzer oder ein Inbetriebsetzer, z.B. Informationen zum Ein-/Ausbau einer Baugruppe 11,12,13 haben, so drückt er für Informationen über die erste Baugruppe 11 das erste Schaltmittel 11a, welches beispielsweise als ein Tastschalter ausgestaltet ist. Die erste Baugruppe 11a ist dabei dazu ausgestaltet über das ausgelöste Ereignis an der ersten Baugruppe 11 einen Auswahlbefehl abzusetzen. Der Auswahlbefehl wird in Form eines Telegramms über den Rückwandbus 4 über das Interface 4a an die Industrieprozesssteuerung 1 weitergeleitet. Das weitergeleitete Telegramm umfasst dabei die erste Baugruppenkennung 11b der ersten Baugruppe 11 und die Versionskennung Vxy der ersten Baugruppe 11.

Über das Identifikationsmittel 3 werden die erste Baugruppenkennung 11b und die Versionskennung Vxy an das Selektionsmittel 5 weitergeleitet, welches dazu ausgestaltet ist den zu der ersten Baugruppe 11 zugehörigen Datensatz aus dem Speichermittel 6 zu selektieren und an den Grafiktreiberbaustein 7 weiterzugeben.

Das auslösende Ereignis für den Auswahlbefehl kann ebenso von dem Inbetriebnahmerechner 23 ausgelöst werden. Der Inbetriebnahmerechner 23 ist hierzu über eine erste Schnittstelle 21 mit der Industriesteuerung 1 verbunden. Der Auswahlbefehl "gib mir Informationen über die erste Baugruppe" wird somit von dem Inbetriebnahmerechner 23 an die von dem von der Industriesteuerung 1 und dann an das Identifikationsmittel 3 weitergegeben. Dabei ist das Identifikationsmittel 3 dazu ausgestaltet über das Interface 4a und den durch die Baugruppen 11,12,13 führenden Rückwandbus 4 die Information für die jeweils geforderte Baugruppe abzufragen. Bei dieser Abfrage wird wieder in der jeweiligen Baugruppe ein Telegramm mit der jeweiligen Baugruppenkennung und der jeweiligen Versionskennung Vxy zusammengestellt und an das Identifikationsmittel 3 zurückgesendet.

Ebenso kann über ein Bediengerät 24, welches über eine zweite Schnittstelle 22 an die Industrieprozesssteuerung 1 angeschlossen ist, ein Auswahlbefehl abgesetzt werden.

Das die angeforderte Handhabungsanleitung auf dem Display 2 der Industriesteuerung 1 dargestellt wird ist nicht einschränkend, der ausgewählte Datensatz 6a für die entsprechende Handhabungsanleitung kann ebenso über die erste Schnittstelle 21 oder die zweite Schnittstelle 22 umgeleitet werden und entweder auf den Inbetriebnahmerechner 23 oder dem Bediengerät 24 dargestellt werden.

Auch kann der ausgewählte Datensatz aus einem externen Speichermittel 6a', welches über eine Datenleitung mit dem Selektionsmittel 5 in Verbindung steht ausgewählt werden, demnach würde ein externer Datensatz 6a' aus dem externen Speichermittel 6' angefordert.

Weiterhin ist es möglich, das die Baugruppen 11,12,13 jeweils ein baugruppeninternes Speichermittel 61,62,63 aufweisen aus denen Baugruppen interne Datensätze 61a,62a,63a ausgelesen werden können.

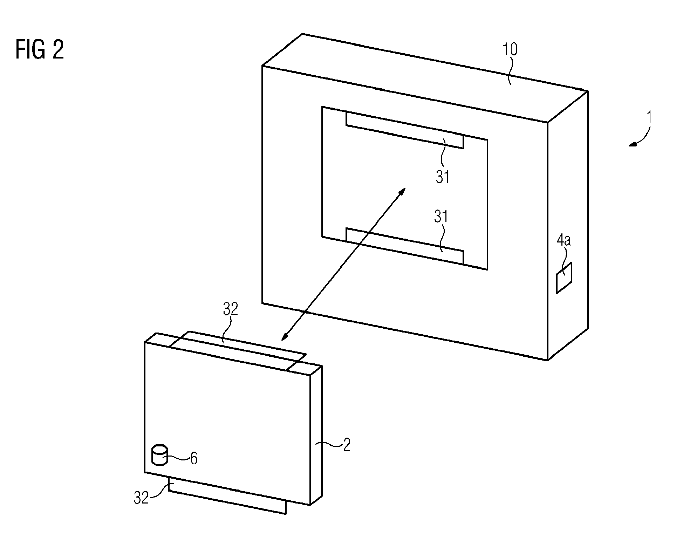

Gemäß FIG 2 ist die aus FIG 1 bekannte Industrieprozesssteuerung 1 mit einem Gehäuse 10 dargestellt. Dabei weist das Gehäuse 10 eine Ausnehmung auf, in die das Display 2 eingesetzt werden kann. Für einen elektrischen und mechanischen lösbaren Eingriff des Displays 2 mit dem Gehäuse 10 weist das Gehäuse 10 erste Verbindungsmittel 31 und das Display 2 zweite Verbindungsmittel 32 auf, welche ineinander greifen und so das Gehäuse 10 mit dem Display 2 lösbar verbinden.

Das Display 2 ist als eine bauliche Einheit ausgestaltet, wobei diese bauliche Einheit zusätzlich das Speichermittel 6 aufweist. Bei einer Vielzahl von Industrieprozesssteuerungen 1, welche in einer Automatisierungsanlage angeordnet sind, muss nicht jede Industrieprozesssteuerung 1 zwingend mit einem Display 2 versehen sein. Ein Inbetriebsetzungsingenieur oder ein Fehler suchender Monteur könnte somit nur ein einziges Display 2 mit sich führen, wobei das Display 2 als eine bauliche Einheit mit dem Speichermittel 6 jeweils die aktuellen Datensätze von Handhabungsanleitungen aller eingesetzten Baugruppen und Baugruppenversionen auf dem Speichermittel 6 gespeichert hat.

## Patentansprüche

1. Industrieprozesssteuerung (1), umfassend
- ein Interface (4a) ausgestaltet zum Anschluss von Baugruppen (11,12,13),
- ein Speichermittel (6,6'),
- ein Identifikationsmittel (3) ausgestaltet um über das Interface (4a) eine Baugruppe (11,12,13) zu identifizieren und anhand einer Baugruppenkennung (11b,12b,13b) eine Versionskennung (Vxy) der Baugruppe (11,12,13) mit der jeweiligen Baugruppenkennung (11b,12b,13b) auszulesen,
- ein Selektionsmittel (5), welches mit dem Identifikationsmittel (3) in Verbindung steht und ausgestaltet ist mittels der Versionskennung (Vxy) und der Baugruppenkennung (11b,12b,13b) einen Datensatz (6a,6a') aus dem Speichermittel (6,6') zu selektieren,
wobei der selektierte Datensatz (6a,6a') eine auf die Versionskennung (Vxy) der Baugruppe (11,12,13) abgestimmte Handhabungsanleitung aufweist,
wobei das Selektionsmittel (5) weiterhin dazu ausgestaltet ist den Datensatz (6a) an einen Grafiktreiberbaustein (7) weiterzuleiten um die Handhabungsanleitung einem Benutzer zu präsentieren.

2. Industrieprozesssteuerung (1) nach Anspruch 1, wobei das Selektionsmittel (5) weiterhin dazu ausgestaltet ist einen Auswahlbefehl, welcher die Baugruppenkennung (11b,12b,13b) enthält, zu interpretieren und die Baugruppenkennung (11b,12b,13b) an das Identifikationsmittel (3) weiterzugeben.

3. Industrieprozesssteuerung (1) nach Anspruch 1 oder 2, aufweisend ein mit dem Grafiktreiberbaustein (7) verbundenes Display (2).

4. Industrieprozesssteuerung (1) nach Anspruch 3, mit einem Gehäuse (10) aufweisend erste Verbindungsmittel (31), wobei das Display (2) als eine bauliche Einheit ausgestaltet ist und zweite Verbindungsmittel (32) aufweist, wobei die ersten und zweiten Verbindungsmittel (31,32) derart ausgestaltet sind, dass das Display (2) elektrisch und mechanisch mit dem Gehäuse (10) lösbar im Eingriff steht.

5. Industrieprozesssteuerung (1) nach Anspruch 3, wobei das Display (2) an einer Baugruppe (11,12,13) angeordnet ist oder eine Displaybaugruppe vorhanden ist.

6. Industrieprozesssteuerung (1) nach Anspruch 4, wobei das Speichermittel (6) in der baulichen Einheit des Displays (2) angeordnet ist.

7. Industrieprozesssteuerung (1) nach Anspruch 5, wobei das Speichermittel (61,62,63) in der Baugruppe (11,12,13) angeordnet ist.

8. Modular aufgebautes Steuerungssystem mit einer Industrieprozesssteuerung (1) nach einem der vorangegangenen Ansprüche, wobei das Interface (4a) als ein selbstaufbauender Rückwandbus (4) ausgestaltet ist und die Baugruppen (11,12,13) aneinanderreihbar an der Industrieprozesssteuerung (1) angeordnet sind, wobei eine Baugruppe (11,12,13) ein Schaltmittel (11a,12a,13a) aufweist, welches ausgestaltet ist den Auswahlbefehl abzusetzen.
